(19) **Europäisches Patentamt**

**European Patent Office**

**Office européen des brevets**

(11) **EP 1 064 618 B1**

(12) **EUROPÄISCHE PATENTSCHRIFT**

(45) Veröffentlichungstag und Bekanntmachung des Hinweises auf die Patenterteilung:
**10.10.2001 Patentblatt 2001/41**

(21) Anmeldenummer: **99917757.9**

(22) Anmeldetag: **02.03.1999**

(51) Int Cl.$^7$: **G06T 3/40**

(86) Internationale Anmeldenummer:
**PCT/DE99/00540**

(87) Internationale Veröffentlichungsnummer:
**WO 99/48047 (23.09.1999 Gazette 1999/38)**

(54) **VERFAHREN ZUR KOORDINATENUMRECHNUNG VON BILDDATEN MIT ZUFÄLLIGEM OFFSET DER BILDPUNKTE**

METHOD FOR CONVERTING THE COORDINATES OF IMAGE DATA BY WAY OF RANDOM OFFSET OF THE PICTURE ELEMENTS

PROCEDE POUR CONVERTIR DES COORDONNEES DE DONNEES D'IMAGE AU MOYEN D'UN DECALAGE ALEATOIRE DES ELEMENTS D'IMAGE

(84) Benannte Vertragsstaaten:
**DE GB**

(30) Priorität: **19.03.1998 DE 19812028**

(43) Veröffentlichungstag der Anmeldung:
**03.01.2001 Patentblatt 2001/01**

(73) Patentinhaber: **Heidelberger Druckmaschinen Aktiengesellschaft**
**69115 Heidelberg (DE)**

(72) Erfinder: **VON WECHGELN, Jörg, Olaf**
**D-24582 Wattenbek (DE)**

(56) Entgegenhaltungen:
**US-A- 5 657 047**

**Beschreibung**

Die Erfindung bezieht sich auf das Gebiet der digitalen Bildverarbeitung und betrifft ein Verfahren zur Umrechnung der Bilddaten eines Bildes auf ein anderes Koordinatensystem, z.B. auf eine andere Größe bzw. auf eine andere Auflösung oder die Berechnung eines gedrehten oder perspektivisch verzerrten Bildes. Koordinatenumrechnungen für Bilddaten werden in allen Anwendungsgebieten der digitalen Bildverarbeitung verwendet.

Ein wichtiges Anwendungsgebiet ist die elektronische Reproduktionstechnik, bei der sehr große Bilddatenmengen verarbeitet werden. In der Reproduktionstechnik werden Druckvorlagen für Druckseiten erzeugt, die alle zu druckenden Elemente wie Texte, Grafiken und Bilder enthalten. Im Fall der elektronischen Herstellung der Druckvorlagen liegen diese Elemente in Form von digitalen Daten vor. Für ein Bild werden die Daten z.B. erzeugt, indem das Bild in einem Scanner punkt- und zeilenweise abgetastet wird, jeder Bildpunkt in Farbkomponenten zerlegt wird und die Farbwerte dieser Komponenten digitalisiert werden. Üblicherweise werden Bilder in einem Scanner in die Farbkomponenten Rot, Grün und Blau (RGB) zerlegt. Für den Vierfarbdruck werden diese Komponenten dann weiter in die Druckfarben Cyan, Magenta, Gelb und Schwarz (CMYK) transformiert.

Im weiteren Arbeitsablauf werden die digitalisierten Texte, Grafiken und Bilder in einer Bearbeitungsstation unter Sichtkontrolle auf einem Farbmonitor oder automatisch nach gespeicherten Layoutvorgaben zu einer Druckseite montiert. Die Druckseite wird dann in einem Datenformat beschrieben, z.B. in der Seitenbeschreibungssprache PostScript, und gespeichert. Um für jede Druckfarbe eine Druckplatte herzustellen, bestehen die Druckseitendaten aus Farbauszugsdaten für jeweils eine der Druckfarben CMYK. Die Farbauszugsdaten werden mit einem Film- bzw. Plattenrecorder in sehr hoher Auflösung auf Filmmaterial oder direkt auf Druckplatten aufgezeichnet. Es gibt auch digitale Druckmaschinen, die ohne Druckplatten arbeiten. In dem Fall werden die Farbauszugsdaten direkt zur digitalen Druckmaschine übertragen und dort auf dem Bedruckstoff ausgedruckt.

Zur Aufzeichnung auf Filmmaterial oder Druckplatten werden die Farbauszugsdaten in einem Raster-Image-Prozessor (RIP) in hochaufgelöste Bitmapdaten umgerechnet, wobei für die unterschiedlichen Dichtewerte der Farben Rasterpunkte unterschiedlicher Größe erzeugt werden. Das Ergebnis ist ein hochaufgelöstes binäres Bild mit nur noch zwei Helligkeitswerten je Bildpunkt (schwarz bzw. weiß). Im englischen Sprachgebrauch wird ein solches Bild als "Bitmap" bezeichnet, in der deutschen Fachsprache auch als "Strichbild".

Eine in der Reproduktionstechnik übliche Auflösung für Bilder ist z.B. 12 Bildpunkte/mm (300 Bildpunkte/Zoll). Werden je Bildpunkt vier Farbwerte gespeichert (CMYK) und die Dichten der Farbwerte mit jeweils 8 bit (= ein Byte) digitalisiert, so ergibt sich für ein Bild der Größe DIN A4 eine Datenmenge von

$$210 \text{ mm} \times 297 \text{ mm} \times 12 \times 12 \times 4 = 35.925.120 \text{ Byte,} \tag{1}$$

d.h. ca. 36 Megabyte. Im Raster-Image-Prozessor werden die Bitmapdaten in einer wesentlich höheren Auflösung erzeugt, z.B. mit 100 Bildpunkten/mm (2540 Bildpunkte/Zoll). Allerdings ist jeder Bildpunkt mit einem Bit digitalisiert, da er nur zwei Helligkeitswerte annehmen kann. Damit ergibt sich für die vier Farbauszugsdaten einer DIN A4 Druckseite eine Datenmenge von

$$210 \text{ mm} \times 297 \text{ mm} \times 100 \times 100 \times 1/8 \times 4 = 311.850.000 \text{ Byte,} \tag{2}$$

d.h. ca. 312 Megabyte. Diese Datenmengen multiplizieren sich noch mit der Zahl der Seiten in einem Druckprodukt. In der elektronischen Reproduktionstechnik müssen also sehr große Datenmengen verarbeitet werden. Deshalb spielt die Verwendung effektiver Verarbeitungsverfahren eine große Rolle. Es kommt in der Reproduktionstechnik häufig vor, daß digitale Bilddaten auf eine andere Bildgröße (unter Beibehaltung der Auflösung) oder auf eine andere Auflösung (unter Beibehaltung der Bildgröße) umgerechnet werden müssen. In beiden Fällen der Maßstabumrechnung ist dasselbe Problem zu lösen. Aus einer gegebenen Zahl von Bildpunkten je Bildzeile und aus einer gegebenen Zahl von Bildzeilen muß eine andere Zahl von Bildpunkten je Bildzeile und eine andere Zahl von Bildzeilen errechnet werden. Die Farbwerte der neu errechneten Bildpunkte müssen aus den entsprechenden Bildpunkten des ursprünglichen Bildes so bestimmt werden, daß die Bildqualität des umgerechneten Bildes nicht leidet. Die nach dem Stand der Technik bekannten Verfahren sind für die großen Bilddatenmengen der Reproduktionstechnik sehr zeitaufwendig. In dem umgerechneten Bild können ursprüngliche Bildstrukturen verfälscht sein und auch störende Muster (Moiré) entstehen, speziell bei der Maßstabumrechnung von gerasterten Bitmapdaten.

Es ist daher die Aufgabe der vorliegenden Erfindung, die Nachteile der bekannten Verfahren zur Koordinatenumrechnung von Bildern zu vermeiden und ein effektives und qualitativ gutes Verfahren anzugeben, das keine störenden Muster erzeugt. Diese Aufgabe wird durch die Merkmale des Anspruchs 1 und der Unteransprüche 2 bis 10 gelöst.

Die Erfindung wird nachfolgend anhand der Figuren 1 bis 8 näher beschrieben. Es zeigen:

Fig. 1  ein Beispiel für ein ursprüngliches Bild mit einer bestimmten Zahl von Bildzeilen und Bildpunkten je Bildzeile,

Fig. 2  die Positionen der neu errechneten Bildpunkte in dem ursprünglichen Bild,

Fig. 3  das umgerechnete Bild mit einer verringerten Zahl von Bildzeilen und Bildpunkten je Bildzeile,

Fig. 4  den Variationsbereich für die Position eines neuen Bildpunktes in Relation zu den benachbarten ursprünglichen Bildpunkten ,

Fig. 5  den Variationsbereich für die Position einer Zeile von neuen Bildpunkten in Relation zu den benachbarten ursprünglichen Bildpunkten,

Fig. 6  ein Beispiel für ein ursprüngliches Bild,

Fig. 7  das verkleinerte ursprüngliche Bild ohne Anwendung des erfindungsgemäßen Verfahrens,

Fig. 8  das verkleinerte ursprüngliche Bild mit Anwendung des erfindungsgemäßen Verfahrens.

Nach dem Stand der Technik erfolgt die Koordinatenumrechnung bei allen Verfahren in zwei Schritten. Im ersten Schritt werden die Positionen der neu zu berechnenden Bildpunkte in Relation zu den Positionen der ursprünglichen Bildpunkte bestimmt. Im zweiten Schritt werden die Farbwerte der neuen Bildpunkte aus den Farbwerten der ursprünglichen Bildpunkte berechnet, die den Positionen der neuen Bildpunkte benachbart sind. Diese beiden Schritte werden im folgenden am Beispiel einer Maßstabumrechnung erläutert.

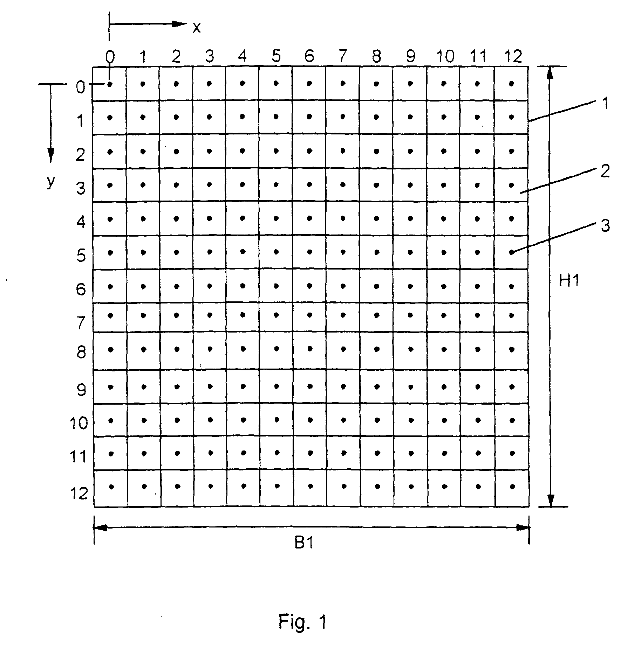

Fig. 1 zeigt ein Beispiel für ein ursprüngliches Bild (1) mit 13 Bildzeilen und 13 Bildpunkten je Bildzeile, das im Maßstab umzurechnen ist. Aus Gründen der vereinfachten Darstellung ist das Bild quadratisch gewählt. Im allgemeinen sind Bilder nicht quadratisch und haben demnach eine unterschiedliche und auch viel höhere Zahl von Bildzeilen und Bildpunkten je Bildzeile. In dem Beispiel ist die Bildfläche mit der Breite B1 und der Höhe H1 in 13 x 13 Teilflächen aufgeteilt, die den Bildpunkten (2) entsprechen. Der Farbwert eines Bildpunkts repräsentiert den Farbwert des Bildes in der entsprechenden Teilfläche. Im Zentrum jedes Bildpunkts kennzeichnet ein Punkt (3) die Position des Bildpunkts in einem x,y-Koordinatensystem. Die Bildzeilen und die Bildpunkte in einer Bildzeile sind jeweils von 0 bis 12 durchnumeriert. Der erste Bildpunkt in der ersten Bildzeile liegt im Koordinatenursprung (0,0). Mit einer gegebenen Auflösung von R Bildpunkten/mm ergeben sich die Abmessungen des Bildes zu B1 = 13/R mm und H1 = 13/R mm.

Das Bild von Fig. 1 soll beispielsweise auf 10 x 10 Bildpunkte umgerechnet werden, d.h. mit einem Maßstabfaktor von S = 10/13. Ob das Bild dadurch verkleinert wird, hängt davon ab, mit welcher Auflösung es wiedergegeben wird. Mit einer unveränderten Auflösung würden sich die verkleinerten Abmessungen B2 = 10/R mm und H2 = 10/R mm ergeben. Bei der Wiedergabe mit einer z.B. gröberen Auflösung kann es trotz der geringeren Bildpunktzahl sogar größer werden. Eine Maßstabumrechnung ist deshalb nicht immer mit einer Änderung der Abmessungen gleichzusetzen. Der Kern der Maßstabumrechnung ist jedoch in jedem Fall, daß ein neues Bild mit einer anderen Zahl von Bildzeilen und Bildpunkten je Bildzeile erzeugt wird.

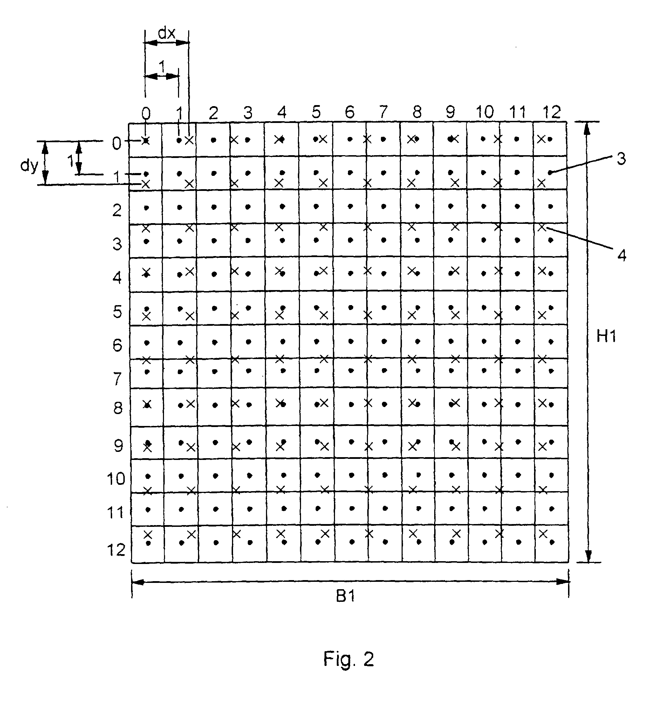

Fig. 2 zeigt die neu errechneten Bildpunkte (4) in Relation zu dem ursprünglichen Bild. Ihre Positionen sind mit einem Kreuz gekennzeichnet. Der erste Bildpunkt in der ersten Zeile des neu errechneten Bildes wird ebenfalls in den Ursprung des x,y-Koordinatensystems gelegt. Zur Bestimmung der Positionen der neuen Bildpunkte werden die neuen Bildpunkte gleichmäßig auf die Bildfläche verteilt. Wenn der Abstand der ursprünglichen Bildpunkte in x- und y-Richtung zu jeweils Eins angenommen wird, hat das Bild in diesen Einheiten die Fläche 13 x 13. Um mit 10 Bildpunkten je Bildzeile und mit 10 Bildzeilen die gleiche Fläche abzudecken, müssen die neuen Bildpunkte größere Abstände dx bzw. dy haben. Der Abstand dx der neuen Bildpunkte in Zeilenrichtung ergibt sich aus dem Verhältnis der alten Bildpunktzahl je Bildzeile zur neuen Bildpunktzahl je Bildzeile, d.h. dx = 13/10 = 1/S. Ebenso ergibt sich in dem Beispiel der Abstand der neuen Bildzeilen zu dy = 13/10 = 1/S. Für die x-Richtung und die y-Richtung können verschiedene Maßstabfaktoren Sx bzw. Sy gewählt werden. Dann ergeben sich die Abstände der neuen Bildpunkte zu

$$dx = 1/Sx \qquad bzw. \qquad dy = 1/Sy. \tag{3}$$

Die x-Position x(n) des n-ten neuen Bildpunktes in einer neuen Bildzeile und die y-Position y(m) der m-ten neuen Bildzeile sind dann

$$x(n) = n \times dx = n \times 1/Sx$$

$$y(m) = m \times dy = m \times 1/Sy. \tag{4}$$

Bei einer allgemeinen Koordinatenumrechnung werden die Positionen u(n) und v(m) der neuen Bildpunkte in einem neuen Koordinatensystem (u,v) mittels Koordinatentransformationsgleichungen fu(x,y) und fv(x,y) als Funktion der Koordinaten der ursprünglichen Bildpunkte in einem ursprünglichen Koordinatensystem (x,y) berechnet.

$$u(n) = fu(x,y)$$

$$v(m) = fv(x,y) \tag{5}$$

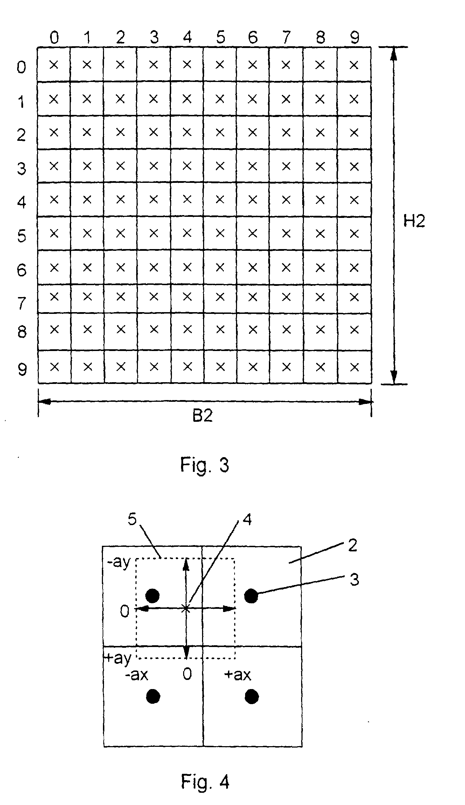

Fig. 3 zeigt für das Beispiel das Bild nach der Maßstabumrechnung, wenn es mit der gleichen Auflösung R Bildpunkte/mm wie das ursprüngliche Bild wiedergegeben wird. Dann erhält man ein verkleinertes Bild mit den Abmessungen B2 = 10/R mm und H2 = 10/R mm.

Im zweiten Schritt der Maßstabumrechnung werden nach dem Stand der Technik die Farbwerte der neuen Bildpunkte nach verschiedenen Verfahren aus den Farbwerten der ursprünglichen Bildpunkte berechnet, die den Positionen der neuen Bildpunkte benachbart sind. Im einfachsten Fall wird der Farbwert eines neuen Bildpunkts gleich dem Farbwert des ursprünglichen Bildpunkts gesetzt, der dem neuen Bildpunkt am nächsten liegt. Dieses Verfahren ist unter dem Begriff "Nearest-Neighbour-Verfahren" bekannt. Es hat speziell für große Bilddatenmengen den Vorteil, daß es sehr schnell durchgeführt werden kann, jedoch den Nachteil, daß Strukturen des ursprünglichen Bildes verfälscht werden und störende Muster erzeugt werden können. Im Beispiel von Fig. 2 werden durch das Nearest-Neighbour-Verfahren die ursprünglichen Bildzeilen bzw. Bildspalten 2, 6 und 11 nicht erfaßt, d.h. feine Bildstrukturen in diesen Zeilen bzw. Spalten, die nur einen Bildpunkt breit sind, gehen bei der Maßstabumrechnung verloren. Außerdem treten die nicht erfaßten Bildzeilen bzw. Bildspalten in regelmäßigen Abständen auf, wodurch ein störendes Muster (Moire) erzeugt werden kann. Bei einer Maßstabumrechnung zur Vergrößerung der Zahl der neuen Bildpunkte und der Zahl der neuen Bildzeilen, liegen die neuen Bildpunkte enger zusammen als die ursprünglichen Bildpunkte. In dem Fall werden durch das Nearest-Neighbour-Verfahren einige Bildzeilen bzw. Bildspalten doppelt erfaßt. Auch dadurch werden die ursprünglichen Bildstrukturen verfälscht und störende Muster können erzeugt werden.

Diese störenden Effekte können gemildert werden, wenn die Farbwerte der neuen Bildpunkte durch gewichtete Addition der Farbwerte von mehreren benachbarten ursprünglichen Bildpunkten interpoliert werden. Dieses bekannte Verfahren ist jedoch rechenintensiv und deshalb für große Bilddatenmengen weniger geeignet. Außerdem sind störende Muster auch damit nicht immer zu vermeiden. In der US Patentschrift US-A-5,657,047 wird ein solchesVerfahren für die Maßstabänderung der Bildschirmdarstellung eines Bildes beschrieben. Die gewichtete Addition der Farbwerte von mehreren benachbarten ursprünglichen Bildpunkten wird dort als "Blending" bezeichnet. Das Patent beschreibt auch eine schaltungstechnische Realisierung der Interpolation, die mit einem geringen Speicheraufwand auskommt.

Speziell für binäre Bilder mit nur zwei Helligkeitswerten (Strichbilder bzw. Bitmap-Bilder) sind auch Verfahren bekannt, bei denen die ursprünglichen Bildpunkte in der Umgebung eines neuen Bildpunktes mittels Methoden der Mustererkennung analysiert werden. Aus dem Ergebnis der Analyse wird dann der Farbwert des neuen Bildpunkts bestimmt, wobei z.B. versucht wird, feine Bildstrukturen zu erhalten, die bei einem reinen Nearest-Neighbour-Verfahren verloren gingen oder stark verfälscht würden. Auch diese Verfahren der Mustererkennung erfordern einen hohen Rechenaufwand je Bildpunkt und sind deshalb für große Bilddatenmengen zu zeitaufwendig.

Durch das erfindungsgemäße Verfahren werden die beschriebenen Nachteile - Verfälschung von Bildstrukturen und Bildung störender Muster - vermieden, ohne daß der Rechenaufwand je Bildpunkt stark erhöht werden muß. Es ist deshalb auch für sehr große Bilddatenmengen, wie sie in der elektronischen Reproduktionstechnik auftreten, geeignet. Dies wird durch eine neue Art der Bestimmung der Positionen für die neuen Bildpunkte erreicht. Diese neue Art der Bestimmung der Positionen kann mit allen bekannten Verfahren der Berechnung der Farbwerte für die neuen Bildpunkte (Nearest-Neighbour-Verfahren, Interpolation, Mustererkennung) kombiniert werden.

Fig. 4 zeigt einen Ausschnitt von 2 x 2 benachbarten ursprünglichen Bildpunkten (2) und die Position eines neuen Bildpunktes (4), wie sie sich nach dem oben erläuterten Verfahren der Positionsbestimmung aus den Abständen dx und dy zwischen den neuen Bildpunkten ergibt. Nach dem erfindungsgemäßen Verfahren wird die Position des neuen Bildpunkts in einem Variationsbereich (5) um diese Position herum zufällig verändert. Dazu kann ein Zufallswert mit einem Zahlenbereich von -ax bis +ax zur x-Koordinate der Position und ein Zufallswert mit einem Zahlenbereich von -ay bis +ay zur y-Koordinate der Position addiert werden. Durch diese Maßnahme wird die Position des neuen Bildpunkts mit einer gewissen Wahrscheinlichkeit mal in den Bereich des einen oder des anderen ursprünglichen Bildpunkts verschoben. Wird der Farbwert des neuen Bildpunkts anschließend z.B. nach dem Nearest-Neighbour-Verfahren berechnet, können einzelne Bildzeilen bzw. Bildspalten des ursprünglichen Bildes nicht ganz verloren gehen (bei Verkleinerung) bzw. sie werden nicht in ihrer ganzen Länge verdoppelt (bei Vergrößerung). Auch werden Bildpunkte nicht mehr in regelmäßige Abständen ausgelassen bzw. verdoppelt, wodurch die Bildung störender Muster vermieden wird. In Verbindung mit der Berechnung der Farbwerte der neuen Bildpunkte mittels Interpolation aus den benachbarten ursprünglichen Bildpunkten werden störende Restmuster vermieden, da in einer Zeile bzw. Spalte nicht immer die gleichen Nachbarpunkte des ursprünglichen Bildes zur Interpolation herangezogen werden.

Der Variationsbereich (5) wird zweckmäßigerweise so groß gewählt, daß er etwa einen halben bis einen Bildpunktabstand des ursprünglichen Bildes umfaßt.

Er muß auch nicht symmetrisch um die Position der neuen Bildpunkte sein. Er kann beliebig asymmetrisch gewählt werden oder auch so, daß nur positive oder nur negative Zufallswerte zu den Koordinaten der Bildpunktposition addiert werden.

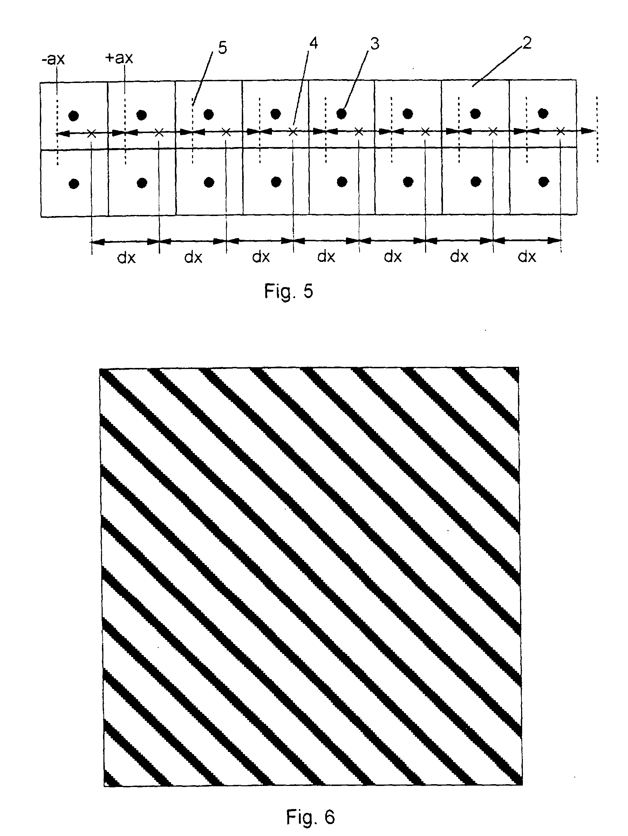

Fig. 5 zeigt eine vereinfachte Ausführung des erfindungsgemäßen Verfahrens, bei dem nicht für jeden neuen Bildpunkt neue Zufallswerte erzeugt werden müssen. Bei dieser Ausführung werden alle neuen Bildpunkte einer neuen Bildzeile in ihrer Position um den gleichen Zufallswert in x-Richtung verschoben, wobei die Bildpunkte untereinander ihren festen Abstand dx behalten. Für jede neue Bildzeile wird ein neuer Zufallswert erzeugt. Ebenso können alle neuen Bildpunkte einer neuen Bildspalte in ihrer Position um den gleichen Zufallswert in y-Richtung verschoben werden, wobei die Bildpunkte untereinander ihren festen Abstand dy behalten. Auf diese Weise brauchen nur am Anfang jeder Bildzeile bzw. Bildspalte neue Zufallswerte erzeugt zu werden, wodurch die Verarbeitungszeit erheblich reduziert wird. Zweckmäßigerweise wird das Verschieben der Bildzeilen in x-Richtung und der Bildspalten in y-Richtung miteinander kombiniert.

Die Erzeugung der Zufallswerte kann während der Verarbeitung mit einem bekannten Zufallswertegenerator erfolgen. Um Verarbeitungszeit zu sparen, kann auch eine Liste von Zufallswerten vorab erzeugt und in einer oder mehreren Tabellen gespeichert werden, z.B. eine Tabelle für die x-Richtung und eine Tabelle für die y-Richtung. Während der Maßstabumrechnung wird dann der jeweils benötigte Zufallswert fortlaufend aus der entsprechenden Tabelle ausgelesen.

Die vorliegende Erfindung wurde am Beispiel der Maßstabumrechnung erläutert. Ihre Anwendung ist jedoch nicht darauf beschränkt. Sie kann bei jeder Art von Koordinatenumrechnung für Bilddaten angewendet werden, wie z. B. Rotation eines Bildes um einen beliebigen Winkel, perspektivische Verzerrung eines Bildes, Abbildung eines Bildes auf eine gekrümmte Fläche im Raum, usw. Solche komplexen Koordinatenumrechnungen spielen in vielen Bereichen der digitalen Bildverarbeitung ein Rolle, z.B. bei der Darstellung von dreidimensionalen Objekten oder bei der Entzerrung von Luft- und Satellitenbildern. Wie bei der einfachen Maßstabumrechnung besteht auch bei diesen komplexen Koordinatenumrechnungen das Problem, daß in dem neuen Bild ursprüngliche Bildstrukturen verfälscht werden und störende Muster entstehen können. Wie bei der Maßstabumrechnung werden auch bei den komplexen Koordinatenumrechnungen in einem ersten Schritt die Positionen der neuen Bildpunkte in einem neuen Koordinatsystem mittels Koordinatentransformationsgleichungen bestimmt, wobei die neuen Bildpunktpositionen zwischen den ursprünglichen Bildpunkten liegen. Bei diesem ersten Schritt kann die vorliegende Erfindung zur Vermeidung der störenden Effekte angewendet werden. In einem zweiten Schritt werden dann ebenfalls wie bei der Maßstabumrechnung die Farbwerte aus den ursprünglichen Bildpunkten berechnet, die in der Umgebung eines neuen Bildpunkts liegen.

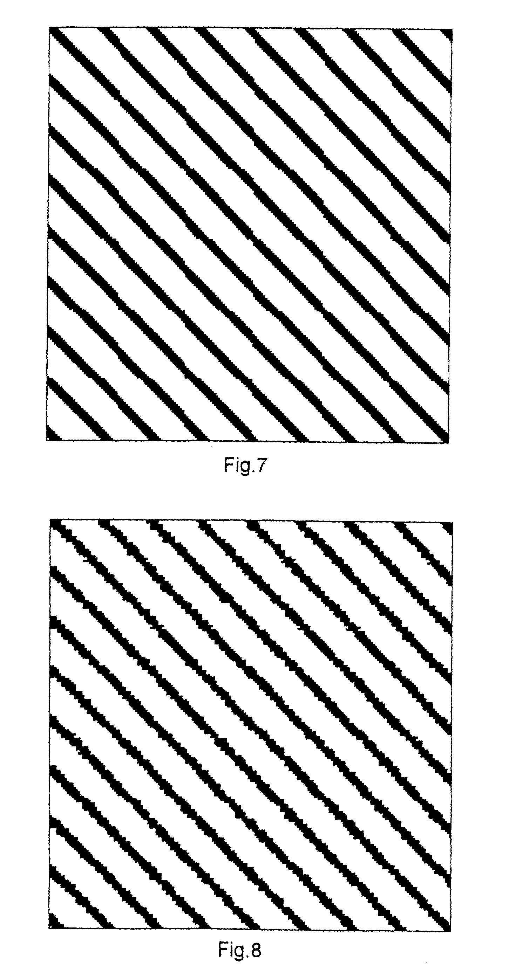

In Fig. 6 bis Fig. 8 wird die Wirkung der Erfindung am Beispiel eines einfachen binären Bildes veranschaulicht. Fig. 6 zeigt einen vergrößerten Ausschnitt aus einem ursprünglichen Bild mit einem diagonalen Streifenmuster. Fig. 7 zeigt das auf 97% verkleinerte Bild ohne Anwendung des erfindungsgemäßen Verfahrens, wobei die Helligkeitswerte der neuen Bildpunkte nach dem Nearest-Neighbour-Verfahren bestimmt wurden. Man erkennt deutlich die ausgelassenen Bildzeilen und Bildspalten, die ein störendes Kästchenmuster erzeugen. In Fig. 8 ist das verkleinerte Bild mit der Anwendung des erfindungsgemäßen Verfahrens gezeigt. Das Kästchenmuster tritt nicht mehr auf. Durch die Zufallsverschiebung der neuen Bildpunkte sind die Ränder der diagonalen Streifen etwas rauher geworden. Dieser Effekt ist aber bei der hohen Auflösung von Bildern insbesondere in der Reproduktionstechnik weit weniger störend als die regelmäßigen Muster, die ohne die Anwendung der Erfindung erzeugt werden.

**Patentansprüche**

1.  Verfahren zur Koordinatenumrechnung von Bilddaten, wobei die Positionen von neuen Bildpunkten in einem neuen Koordinatensystem mittels Koordinatentransformationsgleichungen aus den Positionen von ursprünglichen Bildpunkten in einem ursprünglichen Koordinatensystem berechnet werden, **dadurch gekennzeichnet, daß** die Positionen der neuen Bildpunkte um die mittels der Koordinatentransformation berechneten Positionen herum zufällig verändert werden.

**2.** Verfahren nach Anspruch 1, **dadurch gekennzeichnet, daß** die Veränderung der Positionen der neuen Bildpunkte durch Addition oder Subtraktion von Zufallswerten auf die berechneten Koordinaten der neuen Bildpunkte erfolgt.

**3.** Verfahren nach Anspruch 2, **dadurch gekennzeichnet, daß** für jeden neuen Bildpunkt neue Zufallswerte addiert oder subtrahiert werden.

**4.** Verfahren nach Anspruch 2, **dadurch gekennzeichnet, daß** für alte neuen Bildpunkte einer Koordinatenrichtung derselbe Zufallswert addiert oder subtrahiert wird.

**5.** Verfahren nach einem der Ansprüche 1 bis 4, **dadurch gekennzeichnet, daß** die zufällige Veränderung der Positionen der neuen Bildpunkte bei der Maßstabumrechnung der Bilddaten angewendet wird.

**6.** Verfahren nach einem der Ansprüche 1 bis 4, **dadurch gekennzeichnet, daß** die zufällige Veränderung der Positionen der neuen Bildpunkte bei einer beliebigen Koordinatentransformation der Bilddaten angewendet wird.

**7.** Verfahren nach einem der Ansprüche 1 bis 6, **dadurch gekennzeichnet, daß** die Bilddaten binäre Bilder mit zwei Farbstufen je Bildpunkt repräsentieren.

**8.** Verfahren nach einem der Ansprüche 1 bis 6, **dadurch gekennzeichnet, daß** die Bilddaten Bilder mit einer beliebigen Zahl von Farbstufen je Bildpunkt repräsentieren.

**9.** Verfahren nach einem der Ansprüche 1 bis 8, **dadurch gekennzeichnet, daß** die Farbwerte der neuen Bildpunkte gleich den Farbwerten der am nächsten benachbarten ursprünglichen Bildpunkte gesetzt werden.

**10.** Verfahren nach einem der Ansprüche 1 bis 8, **dadurch gekennzeichnet, daß** die Farbwerte der neuen Bildpunkte durch Interpolation aus den Farbwerten der benachbarten ursprünglichen Bildpunkte berechnet werden.


**Claims**

**1.** Method for converting the coordinates of image data, wherein the positions of new image dots in a new system of coordinates are calculated by coordinate transformation equations from the positions of original image dots in an original system of co-ordinates, **characterized in that** the positions of the new image dots are randomly modified around the positions calculated by the transformation of coordinates.

**2.** Method according to Claim 1, **characterized in that** the modification of the positions of the new image dots is performed by adding or subtracting random values to or from the calculated coordinates of the new image dots.

**3.** Method according to Claim 2, **characterized in that** new random values are added or subtracted for each new image dot.

**4.** Method according to Claim 2, **characterized in that** the same random value is added or subtracted for all new image dots of a coordinate direction.

**5.** Method according to any one of Claims 1 to 4, **characterized in that** the random modification of the positions of the new image dots is used in the scale conversion of the image data.

**6.** Method according to any one of Claims 1 to 4, **characterized in that** the random modification of the positions of the new image dots is used in any desired transformation of the coordinates of the image data.

**7.** Method according to any one of Claims 1 to 6, **characterized in that** the image data represent binary images with two shades of colour per image dot.

**8.** Method according to any one of Claims 1 to 6, **characterized in that** the image data represent images with any desired number of shades of colour per image dot.

**9.** Method according to any one of Claims 1 to 8, **characterized in that** the colour values of the new image dots are set equal to the colour values of the most closely adjacent original image dots.

**10.** Method according to any one of Claims 1 to 8, **characterized in that** the colour values of the new image dots are calculated by interpolation from the colour values of the adjacent original image dots.

**Revendications**

**1.** Procédé de conversion des coordonnées de données d'images, selon lequel on calcule les positions des nouveaux points image dans un nouveau système de coordonnées, à l'aide d'équations de transformation de coordonnées, à partir de la position des points image d'origine, dans un nouveau système de coordonnées,
**caractérisé en ce qu'**
on modifie de manière aléatoire les positions des nouveaux points image autour des positions calculées à l'aide de la transformation des coordonnées.

**2.** Procédé selon la revendication 1,
**caractérisé en ce que**
la modification des positions des nouveaux points image se fait par addition ou soustraction de valeurs aléatoires aux coordonnées calculées des nouveaux points image.

**3.** Procédé selon la revendication 2,
**caractérisé en ce que**
pour chaque nouveau point image, on additionne ou on soustrait de nouvelles valeurs aléatoires.

**4.** Procédé selon la revendication 2,
**caractérisé en ce que**
pour tous les nouveaux points image d'une direction de coordonnées, on ajoute ou on soustrait la même valeur aléatoire.

**5.** Procédé selon l'une quelconque des revendications 1 à 4,
**caractérisé en ce qu'**
on applique le changement aléatoire des positions des nouveaux points image pour la conversion des échelles des données des images.

**6.** Procédé selon l'une quelconque des revendications 1 à 4,
**caractérisé en ce que**
le changement aléatoire des positions de nouveaux points image est appliqué à une transformation de coordonnées quelconque des données d'image.

**7.** Procédé selon l'une quelconque des revendications 1 à 6,
**caractérisé en ce que**
les données d'image représentent des images binaires avec deux niveaux de teintes pour chaque point image.

**8.** Procédé selon l'une quelconque des revendications 1 à 6,
**caractérisé en ce que**
les données d'image représentent des images ayant un nombre quelconque de niveaux de teintes par points image.

**9.** Procédé selon l'une quelconque des revendications 1 à 8,
**caractérisé en ce que**
les valeurs de teintes des nouveaux points image sont réglées pour être égales aux valeurs de teintes des points image d'origine les plus proches.

**10.** Procédé selon l'une quelconque des revendications 1 à 8,
**caractérisé en ce que**
les valeurs de teintes des nouveaux points image sont calculées par interpolation à partir des valeurs de teintes des points image d'origine les plus proches.

Fig. 1

Fig. 2

Fig. 3

Fig. 4

Fig. 5

Fig. 6

Fig.7

Fig.8